# Europäisches Patentamt
# European Patent Office
# Office européen des brevets

(11) Publication number: **0 063 654**
**B1**

(12) **EUROPEAN PATENT SPECIFICATION**

(45) Date of publication of patent specification: **23.07.86**

(51) Int. Cl.⁴: **C 08 F 8/50, C 08 J 3/28**

(21) Application number: **81301809.0**

(22) Date of filing: **23.04.81**

(54) **Improved method of visbreaking polypropylene.**

(43) Date of publication of application:
**03.11.82 Bulletin 82/44**

(45) Publication of the grant of the patent:
**23.07.86 Bulletin 86/30**

(84) Designated Contracting States:
**BE DE FR GB IT NL**

(56) References cited:
**US-A-3 349 018**
**US-A-3 692 877**
**US-A-4 051 306**
**US-A-4 282 076**

(73) Proprietor: **Himont Incorporated**
**1313 North Market Street**
**Wilmington Delaware 19894 (US)**

(72) Inventor: **Boynton, Donald Eugene**
**109 Round Hill Road**
**Kennett Square Pennsylvania 19348 (US)**

(74) Representative: **Brock, Peter William et al**
**Michael Burnside & Partners 2 Serjeants' Inn**
**Fleet Street**
**London EC4Y 1HL (GB)**

Courier Press, Leamington Spa, England.

## Description

This invention relates to a process for lowering the molecular weight and narrowing the molecular weight distribution of crystalline propylene polymers. It relates particularly to a process for preparing an environmentally stable plastic composition by visbreaking propylene polymers to reduce the molecular weight controllably using an activated portion of the polymer as a prodegradant.

In the production of propylene polymers, i.e., polypropylene and crystalline copolymers, the molecular weight of the polymerized product may be rather closely controlled at any desired level about about 200,000 weight average molecular weight ($M_w$) corresponding to a melt flow rate (MFR) (g/10 min. at 230°C.) of up to about 20. Yields of crystalline propylene polymers with a melt flow above about 20 made directly in polymerization are impractically low. To produce lower molecular weight products, the propylene polymer may be subjected to chain scission, a process which is called visbreaking. This process not only lowers the molecular weight and raises the melt flow rate, but it also leads to a narrowing of the molecular weight distribution. One measure of the molecular weight distribution is the ratio of the weight average molecular weight to the number average molecular weight ($M_w/M_n$). A visbroken polymer of a given molecular weight has a better balance of processing and physical properties for many articles made from it than does a nonvisbroken polymer having the same molecular weight. Generally speaking, higher molecular weight leads to better physical properties but poorer processing properties; conversely, lower molecular weight leads to poorer physical properties but better processing properties. A low molecular weight polymer with narrow molecular weight distribution gives both good physical and processing properties in many fabricated articles. Therefore, it has been common procedure in the prior art to polymerize propylene polymers to a higher molecular weight than desired for the final application and then to visbreak to the desired molecular weight.

Several different types of chemical reactions which are well known can be employed for visbreaking propylene polymers. An example is thermal pyrolysis, which is accomplished by exposing a polymer to high temperatures, e.g., in an extruder at 350°C. or higher. Another approach is exposure to powerful oxidizing agents. A further approach is exposure to ionizing radiation. Another method, which is the method used almost exclusively in commercial practice, is the addition of a prodegradant to the polymer before pelletization.

A prodegradant is a substance which promotes chain scission when mixed with the polymer which is then heated under extrusion conditions. The prodegradants used in current commercial practice are mainly alkyl hydroperoxides or dialkyl peroxides. These materials, at elevated temperatures, initiate a free radical chain reaction resulting in scission of the polypropylene molecules. The use of alkyl hydroperoxide or dialkyl peroxide prodegradants has been a satisfactory method of visbreaking propylene polymers in many respects, but there is considerable room for improvement. One objectionable feature is the cost of the prodegradant. Another is the fact that the decomposition products of the prodegradants remain in the polymer as contaminants which may be noxious in some subsequent applications.

It is well known from laboratory experiments that propylene polymers may be reduced in molecular weight by exposure to air at elevated temperatures. This reduction is caused by oxidative chain scission. For economic reasons and because it is difficult to obtain a uniform controlled level of molecular weight reduction, this reaction is not the basis for a practical commercial visbreaking operation. However, air adventitiously entrained into an extruder in pelletizing operations may cause a small but measurable amount of visbreaking. The amount of visbreaking obtained in this manner is too small to cause an appreciable improvement in properties.

If propylene polymers are heated in the absence of air or any other reagents, a certain amount of molecular weight reduction takes place through thermal pyrolysis. The temperatures required are substantially higher than normally encountered in polymer processing. Because of the energy requirements and the poor heat transfer characteristics of high polymers, this reaction is economically unattractive as a basis for commercial visbreaking operations.

It is well known that gamma or beta radiation of sufficient intensity ruptures chemical bonds. When propylene polymers are subjected to such radiation, carbon-carbon bonds are ruptured resulting in chain scission with the creation of free radicals. Hydrogen-carbon bonds may also be ruptured creating additional free radical sites. Although this method of scissioning polypropylene is well established in the chemical literature, it is not employed on a commercial scale because of cost, hazard, and the difficulty of obtaining uniform irradiation.

It is object of the present invention to achieve visbreaking by modification of a propylene polymer itself using no additional ingredients and producing no reaction products or by-products other than the scission products of the polymer.

According to the invention, a process for reducing the molecular weight of a propylene polymer by adding a prodegradant and an antioxidant e.g. a substituted phenol, such as 1,3,5 - trimethyl - 2,4,6 - tris(3,5 - di - t - butyl - 4 - hydroxybenzyl)benzene to the polymer and visbreaking the polymer by shear-mixing the mixture in an extruder while heating the mixture to an extrusion temperature between about 200°C and 300°C, is characterised in that the prodegradant is formed by exposing a first portion of the polymer to between $10^3$ and $10^5$ Gy of ionizing radiation to activate that portion and incorporating the activated prodegradant into a second portion of the polymer that is at least as large as the activated part, the antioxidant being either contained in the said second portion of the polymer or added to the mixture before extrusion. Preferably the mixture is heated during extrusion with a holdup time of at least 30 seconds. Preferably the extrusion temperature is between 225 and 275°C.

In the practice of this invention, the propylene polymer is significantly reduced in molecular weight and the molecular weight distribution is narrowed. · The irradiation is carried out, preferably by gamma rays or by a high voltage electron beam method, at a level of between $10^3$ and $10^5$ Gy, preferably $5 \cdot 10^3$ to $2.5 \cdot 10^5$ Gy.

The term "propylene polymer" is employed herein to connote a solid, crystalline, essentially stereoregular or isotactic polymer derived predominantly from propylene, which may be polypropylene itself, a random copolymer of propylene with another olefin such as ethylene or 1-butene containing up to 10% of the other olefin or a block copolymer of propylene with another olefin such as ethylene or 1-butene containing up to 25% of the other olefin.

The following examples are provided to further illustrate the present invention. All parts and percentages are by weight unless otherwise indicated.

Example 1

A control mixture of 100 parts polypropylene flake having a melt flow rate (MFR) of 3 and an intrinsic viscosity of 2.55 which corresponds to a molecular weight of about 360,000 ($M_w$) and with a molecular weight distribution of about 10 ($M_w/M_n$), plus 0.1 part of stabilizer antioxidant 1,3,5 - trimethyl - 2,4,6 - tris(3,5 - di - t - butyl - 4 - hydroxybenzyl)benzene and 0.1 part of calcium stearate was passed through a pelletizing extruder at a temperature of 200°C. with a holdup time of about three minutes. The melt flow rate of the resulting pellets was 13 which corresponds to a molecular weight of about 250,000 ($M_w$). To demonstrate the effect of the instant invention, a sample of the same polypropylene flake as used above in the control mixture was exposed to $1.5 \cdot 10''$ Gy of electron beam (beta ray) radiation. One part of this irradiated flake was added to 100 parts of the control mixture and the resulting mixture was passed through a pelletizing extruder at 288°C. with a holdup time of about 3 minutes. The resulting pellets had a melt flow rating of 27, corresponding to a molecular weight of about 195,000. The pellets had a molecular weight distribution of about 4. Plastic cups made by injection molding these pellets, using both the process of this invention and the control process were equally tough and strong but the pellets made by the process of this invention permitted · much faster molding cycles. A non-visbroken material polymerized directly to a melt flow of 27 which is the same melt flow rate as the sample made by the process of this invention, also gave fast molding cycles but the molded parts were much more brittle than those made from pellets produced by the inventive process. For example, when these injection molded cups were dropped on a concrete floor from a height of 1.83 m, none of those made from the material processed according to this invention broke, while half of those made from the non-visbroken polymer of the same melt flow rate broke in this test. An injection molded sheet 0.13 cm. thick made from the composition of this invention was tested for heat stability in an oven at 150°C. for 18 days. It retained its integrity, indicating that it would be stable to degradation under environmental conditions for a very long period of time. This stability is equivalent to that of the non-visbroken polypropylene containing the same amount of stabilizer.

Example 2

The control mixture of Example 1, to which 0.5% antioxidant light stabilizer 2 - hydroxy - 4 - n - octyloxybenzophenone was added, was passed through a pelletizing extruder at 275°C. The resulting melt flow rate of these pellets was 5.5. In a fiber spinning experiment, where these pellets were melted in an extruder and pumped through a 50 hole spinneret by a gear pump at a temperature of 250°C. at a rate of 1/2 g/min./hole, forming a 9 denier per filament (dpf) fibers at a take-up rate of 500 meters per minute, the threadline break frequency was found to be greater than 110 per 5000 kg. of fiber produced.

To demonstrate the effect of the instant invention, 10 parts of the polypropylene flake used in the control mixture were exposed to $0.5 \cdot 10^4$ Gy of beta radiation and were then blended with 90 parts of the control mixture. This blend was passed through a pelletizing extruder at 275°C. The MFR of the resulting pellets was 68. The same fiber spinning experiment was run using these pellets, spinning the same 9 dpf fibers at the same take-up rate of 500 m/min. In this case the threadline break frequency dropped to less than 5.5 per 5000 kg. of fiber. In addition, the output rate could be increased fourfold without increasing the threadline break frequency to the level encountered with the fibers made from the control mixture. Both the fibers formed in the control experiments and those formed from the polymer prepared under the conditions of this invention were resistant to degradation after exposure to sunlight for six months in Florida.

Example 3

A control mixture consisting of the same type of polymer and additives as employed in the control mixture of Example 1 was extruded and pelletized at 235°C., except that tetrakis [methylene(3,5 - di - t - butyl - 4 - hydroxy hydrocinnamate)] methane was used as the antioxidant. The MFR of the resulting pellets was 3.6. These pellets were extruded at 275°C. through a center fed flat film die with a 0.051 cm gap, and quenched on a chill roll to prepare a film 0.013 cm. thick, which was smooth, bright, colorless and free of gels. The film had a gloss value of 80, a haze value of 3% and gauge uniformity of about 9%. A portion of the polypropylene flake used in the above control run was exposed to $2.5 \cdot 10^4$ Gy of gamma-radiation using a cobalt 60 source. To the samples containing 100 parts of the control mixture described above were added 0.5, 1.0, 5.0 and 10.0 parts of the irradiated flake. These samples were pelletized at 235°C. The respective MFR's were 9, 11, 19 and 27, respectively. These pellets were then extruded at 275°C. through a center fed flat film die with a 0.051 cm gap, and quenched on a chill roll, to prepare a film 0.013 cm, thick, which was smooth, bright, colorless and free from gels. These films had gloss values of 85, haze values of 2% and gauge uniformity of about 5%. The films produced using the process of this invention were clearly superior to the control films in gloss, haze and gauge uniformity. Polypropylene with a normal molecular weight distribution as obtained directly from polymerization even with a MFR as high as 27 would not give films under these conditions with gauge uniformity as low as 5%. The films produced using the process of this invention were essentially equivalent to the control in resistance to heat and light exposure.

Example 4

A control mixture of 100 parts polypropylene flake having a melt flow rate of 0.5 and an intrinsic viscosity of 3.63 which corresponds to a molecular weight of about 580,000 ($M_w$) and with a molecular weight distribution of about 10 ($M_w/M_n$) plus 0.1 part of antioxidant stabilizer 1,3,5 - trimethyl - 2,4,6 - tris(3,5 - di - t - butyl - 4 - hydroxybenzyl) benzene and 0.1 part of calcium stearate was passed through a pelletizing extruder at a temperature of 210°C. with a holdup time of about three minutes. The melt flow rate of the resulting pellets was 0.8 which corresponds to a molecular weight of about 510,000 ($M_w$). To demonstrate the effect of the instant invention, a sample of the same polypropylene flake as used above in the control mixture was exposed to $10^3$ Gy of electron beam (beta ray) radiation. Twenty-five parts of this irradiated flake was added to 75 parts of the control mixture and the resulting mixture was passed through a pelletizing extruder at 210°C. with a holdup time of about 3 minutes. The resulting pellets had a melt flow rating of 1.4, corresponding to a molecular weight of about 430,000. It had a molecular weight distribution of about 6. Using pellets from both the process of this invention and the control process sheets 0.25 cm. thick were formed by extruding at 240°C. in a 11.4 cm. extruder with a length to diameter ratio of 30:1, at a rate of 431 kg./h through a center fed flat sheeting die with a 0.27 cm. gap. The sheets so formed were equally tough and strong but the sheet from the pellets made by the process of this invention had a smooth surface whereas the sheet from the control pellets had a rough orange peel-like surface. The visbroken sample was also extruded at 454 kg./h rate while maintaining the same high quality of plastic sheet produced. Both the sheets formed from the visbroken sample and that prepared from the control were resistant to environmental degradation on exposure outdoors.

Example 5

A one inch thick layer of polypropylene flake, as used in the control mixture of Example 1, was placed on a moving belt and exposed to electron beam radiation in a 550,000 volt machine. Penetration of the electron beam was to a depth of 0.318 cm. into the flake, and the speed of the belt was adjusted so that this thickness of the flake was exposed to $10^4$ Gy of radiation. The irradiated and unirradiated portions of the material were mixed and 0.1 part of antioxidant heat stabilizer 1,3,5 - trimethyl - 2,4,6 - tris(3,5 - di - t - butyl - 4 - hydroxybenzyl) benzene was added during the mixing process. In addition, 0.1 part of calcium stearate was also added. The mixture was extruded through a pelletizing extruder at 210°C. with a holdup time of about three minutes. The resulting pellets had a MFR of 28 and the molecular weight distribution was about 4. Sheets prepared from this polymer were resistant to degradation on outdoor exposure.

Example 6

Polypropylene flake corresponding to that used in the control mixture of Example 3 was exposed to $0.5 \cdot 10^4$ Gy of beta radiation. Ten parts of this irradiated sample were mixed with 90 parts of a copolymer of propylene and ethylene containing 8% ethylene with a MFR of 2.5 compounded with the stabilizing additives used in Example 2. The mixture was extruded at 250°C. with a holdup time of about one minute. The resulting pelleted product had a MFR of 35 and a molecular weight distribution of about 4. Injection-molded articles prepared from these pellets were impact resistant and resistant to environmental degradation.

Examples of antioxidants and stabilizers useful in this invention include 2,6 - bis(1 - methyl-heptadecyl) - p - cresol, butylated styrenated cresols, 4,4' - butylidene bis(6 - t - butyl - m - cresol), cyclic neopentanetetrayl bis(octadecyl phosphate), 4,4' - cyclohexylidene bis(2 - cyclhexyl phenol), 3,5 - di - t - butyl - 4 - hydroxyhydrocinnamic acid triester of 1,3,5 - tris(2 - hydroxyethyl) - s - 2,6,6(1H,3H,5H) trione, 2,6 - di - t - butyl - 4 - ethyl phenol, 2,2' - methylene bis(4 - methyl - 6 - t - butyl phenol) octadecyl - 3,5 - di - t - butyl - 4 - hydroxyhydrocinnamate, tetrakis[methylene(3,5 - di - t - butyl - 4 - hydroxyhydrocinnamate)] methane, 4,4 - thiobis(6 - t - butyl - m - cresol), 1,3,5 - trimethyl - 2,4,6 - tris(3,5 - di - t - butyl - 4 - hydroxybenzyl) benzene, tri(mixed mono- and di-nonylphenyl) phosphite, 1,3,5 - tris(3,5 - di - t - butyl - 4 - hydroxy - benzyl) - 2 - triazine - 2,4,6(1H,3H,5H) trione, tris(2 - methyl - 4 - hydroxy - 5 - t - butylphenyl) butane, 1,3,5 - tris(4 - t - butyl - 3 - hydroxy - 2,6 - dimethylbenzyl) - 1,3,5 - triazine - 2,4,6 - (1H,3H,5H) - trione, and di - t - butyl - p - cresol. Such materials are normally employed at levels of about 0.1% to 1% based on the polypropylene Secondary heat stabilizers, such as dilaurylthiodipropionate and light absorbing antioxidants, such as 2 - hydroxy - 4 - n - octyloxybenzophenone may also be employed.

Pigments, mineral fillers, antiacids, slip agents, antistatic agents, resin modifiers and other polymers may also be mixed with the polypropylene without detracting from the operability of the invention.

In the practice of the invention, a portion of the polypropylene, e.g., 0.5% to 50%, preferably 5% to 25%, of the total amount to be visbroken, is activated by exposure to ionizing radiation. When this portion is mixed with the balance and the resulting mixture is heated to extrusion temperature of 200°—300°C., the entire mixture is significantly reduced in molecular weight, and the molecular weight distribution is narrowed. The reduction of the average molecular weight of the resulting mixture is greater than can be explained by dilution of the unexposed fraction of the polypropylene with the activated fraction of the polymer. Such a mixture without a subsequent chemical reaction being involved would be expected to have a broader molecular weight distribution than that of the original polymer and would lead to gel specks in film produced from the polymer blend and to spin breaks in fiber spinning using the blend, due to a tendency toward incompatibility between the original and the lower molecular weight activated portions of the polymer. Since the molecular weight distribution of the mixture after extrusion is narrowed and the resulting polymer gives gel-free films and improved fiber spinning performance, it is apparent that the whole polymer mixture has been modified during the extrusion process.

The examples above show that the activated fraction of the polypropylene causes chain scission in the unactivated fraction leading to a uniform lower molecular weight mixture. It is contemplated that the mechanism for this action is that the activated portion contains moieties which initiate free radical chain scission throughout the entire polymer melt.

These moieties are considered to be free radicals, which may be converted to hydroperoxide groups on exposure to air over a period of time.

## Claims

1. A process for reducing the molecular weight of a propylene polymer by adding a prodegradant and an antioxidant to the polymer and visbreaking the polymer by shear mixing the mixture in an extruder while heating the mixture to an extrusion temperature between 200°C and 300°C, characterised in that the prodegradant is formed by exposing a first portion of the polymer to between $10^3$ and $10^5$ Gy of ionizing radiation to activate that portion and incorporating the activated prodegradant into a second portion of the polymer that is at least as as large as the activated part, the antioxidant being either contained in the said second portion of the polymer or added to the mixture before extrusion.

2. A process as claimed in claim 1 characterised in that said ionizing radiation comprises electron beam radiation or gamma radiation.

3. A process as claimed in claim 1 or 2 characterised in that said ionizing radiation is between $5 \cdot 10^3$ and $2.5 \cdot 10^4$ Gy.

4. A process as claimed in any preceding claim characterised in that said antioxidant is a substituted phenol.

5. A process as claimed in claim 4 characterised in that said antioxidant is 1,3,5 - trimethyl - 2,4,6 - tris - (3,5 - di - t - butyl - 4 - hydroxybenzyl) benzene.

6. A process as claimed in any preceding claim characterised in that said mixture is heated during extrusion with a holdup time of at least 30 seconds.

7. A process as claimed in any preceding claim characterised in that said extrusion temperature is between 225°C and 275°C.

8. A process as claimed in any preceding claim characterised in that said first portion constitutes from 0.5% to 50% of the total weight of said first and second portions.

9. A process as claimed in claim 8 characterised in that said first portion constitutes from 5% to 25% of the total weight of said first and second portions.

## Patentansprüche

1. Verfahren zur Erniedrigung des Molekulargewichts eines Propylenpolymeren durch Zusatz eines Abbauhilfsmittels und eines Antioxydans zum Polymer und Visbreaking des Polymeren durch Scherkraftvermischung des Gemenges in einem Extruder unter Erhitzen des Gemischs auf eine Extrusionstemperatur zwischen 200°C und 300°C, dadurch gekennzeichnet, dass das Abbauhilfsmittel durch Beaufschlagung eines ersten Anteils des Polymeren mit zwischen $10^3$ und $10^5$ Gy ionisierender Strahlung zur Aktivierung dieses Anteils gebildet wird und das aktivierte Abbauhilfsmittel in einen zweiten Anteil des Polymeren eingearbeitet wird, der mindestens so gross wie der aktivierte Teil ist, wobei das Antioxydans entweder in diesem zweiten Anteil des Polymeren enthalten ist oder dem Gemisch vor der Extrusion zugesetzt wird.

2. Verfahren nach Anspruch 1, dadurch gekennzeichnet, dass besagte ionisierende Strahlung aus Elektronenstrahlen oder Gammastrahlung besteht.

3. Verfahren nach Anspruch 1 oder 2, dadurch gekennzeichnet, dass besagte ionisierende

Strahlung zwischen $5 \cdot 10^3$ und $2{,}5 \cdot 10^4$ Gy beträgt.

4. Verfahren nach einem der vorhergehenden Ansprüchre, dadurch gekennzeichnet, dass als solches Antioxydans ein substituiertes Phenol vorliegt.

5. Verfahren nach Anspruch 4, dadurch gekennzeichnet, dass als solches Antioxydans 1,3,5 - Trimethyl - 2,4,6 - tris - (3,5 - di - t - butyl - 4 - hydroxybenzyl) - benzol vorliegt.

6. Verfahren nach einem der vorhergehenden Ansprüche, dadurch gekennzeichnet, dass dieses Gemisch bei der Extrusion mit einer Verweilzeit von mindestens 30 Sekunden erhitzt wird.

7. Verfahren nach einem der vorhergehenden Ansprüche, dadurch gekennzeichnet, dass diese Extrusionstemperatur zwischen 225°C und 275°C liegt.

8. Verfahren nach einem der vorhergehenden Ansprüche, dadurch gekennzeichnet, dass jener erste Anteil 0,5% bis 50% des Gesamtgewichts jener ersten und zweiten Anteile darstellt.

9. Verfahren nach Anspruch 8, dadurch gekennzeichnet, dass jener erste Anteil 5% bis 25% des Gesamtgewichts jener ersten und zweiten Anteile darstellt.

**Revendications**

1. Procédé de réduction de las masse moléculaire d'un polymère du propylène en ajoutant un prodégradant et un antioxydant au polymère, et en réduisant la viscosité du polymère en mèlangeant avec cisaillement le mélange dans une extrudeuse tout en chauffant le mélange à une température d'extrusion entre 200°C et 300°C, caractérisé en ce que le prodégradant est formé en exposant une première portion du polymère à $10^3$—$10^5$ Gy de radiations ionisantes pour activer cette portion et en incorporant le prodégradant activé dans une seconde portion du polymère qui est au moins aussi importante que la partie activée, l'antioxydant étant soit contenu dans cette seconde portion du polymère soit ajouté au mélange avant l'extrusion.

2. Procédé suivant la revendication 1, caractérisé en ce que cette radiation ionisante comprend une radiation de faisceaux électroniques ou une radiation gamma.

3. Procédé suivant les revendications 1 ou 2, caractérisé en ce que cette radiation oxydante est entre $5.10^3$ et $2{,}5.10^4$ Gy.

4. Procédé suivant l'une quelconque des revendications précédentes, caractérisé en ce que cet antioxydant est un phénol substitué.

5. Procédé suivant la revendication 4, caractérisé en ce que cet antioxydant est le 1,3,5 - triméthyl - 2,4,6 - tris - (3;5 - di - t - butyl - 4 - hydroxybenzyl) benzène.

6. Procédé suivant l'une quelconque des revendications précédentes, caractérisé en ce que ce mélange est chauffé au cours de l'extrusion avec un temps de retenue d'au moins 30 secondes.

7. Procédé suivant l'une quelconque des revendications précédentes, caractérisé en ce que cette température d'extrusion est entre 225°C et 275°C.

8. Procédé suivant l'une quelconque des revendications précédentes, caractérisé en ce que cette première portion constitue de 0,5% à 50% du poids total de cette première et de cette seconde portions.

9. Procédé suivant la revendication 8, caractérisé en ce que cette première portion constitue de 5% à 25% du poids total de cette première et de cette seconde portions.